# EUROPEAN PATENT SPECIFICATION

(11) **EP 1 745 604 B1**
(45) Date of publication and mention of the grant of the patent: **15.06.2011**
(21) Application number: 04809197.9
(22) Date of filing: 28.12.2004
(51) Int. Cl.: H04L 12/56

(54) **HSDPA FLOW CONTROL, CONTROL FRAMES RTT MEASUREMENT**
HSDPA-STRÖMUNGSSTEUERUNG, STEUERRAHMEN-RTT- MESSUNG
COMMANDE DE FLUX HSDPA, MESURE DE RTT DE TRAMES DE SERVICE

(30) Priority: 05.05.2004 US 568389 P
(43) Date of publication of application: 24.01.2007
(73) Proprietor: Telefonaktiebolaget L M Ericsson (publ), 164 83 Stockholm (SE)
(72) Inventor: LUNDH, Peter, S-127 61 Skärholmen (SE); ANDERSSON, Peter, S-164 47 Kista (SE)
(74) Representative: Kühn, Friedrich Heinrich
(86) International application number: PCT/SE2004/002024
(87) International publication number: WO 2005/107187

(56) References cited:
- EP-A2- 1 280 297
- WO-A1-03/049482
- GB-A- 2 403 378
- KOGA H. ET AL: 'TCP flow control using link layer information in mobile networks' INTERNET PERFORMANCE AND CONTROL OF NETWORK SYSTEMS III, PROCEEDINGS OF THE SPIE - THE INTERNATIONAL SOCIETY FOR OPTICAL ENGINEERING vol. 4865, 30 July 2002 - 31 July 2002, BOSTON, USA, pages 305 - 315, XP002990985 & DATABASE INSPEC [Online] Database accession no. 7563843

## Description

### CLAIMING BENEFIT OF PRIOR FILED APPLICATION

This application claims the benefit of U.S. Provisional Application Serial No. 60/568,389 filed on May 5, 2004 and entitled "HSDPA Flow Control, Control Frames RTT Measurement".

### BACKGROUND OF THE INVENTION

### Field of the Invention

The present invention relates in general to a third generation cellular system and, in particular, to a radio base station (RBS) that can measure a round-trip-time (RTT) which is the time it takes an uplink (UL) control frame to travel over a transport link (Iub) to a radio network controller (RNC) and a downlink (DL) control frame to travel back from the RNC.

### Description of Related Art

Today there is a high level of interest in enhancing the performance of a third generation cellular system that implements the high-speed-downlink-packet-access (HSDPA) provision of the Wideband Code Division Multiple Access (WCDMA) standard.

The performance of the third generation cellular system could be enhanced if there was a way a radio base station (RBS) could measure a round-trip-time (RTT) which is the time it takes a frame to travel on a transport link ("Iub") from the RBS to a radio network controller (RNC) and the time it takes another frame to travel back from the RNC to the RBS.

EP 1280297 A2 discloses a method for determining flow quality statistics for real-time transport protocol (RTP) data flows in an IP network. A rerouting procedure is implemented in the system for controlling the load pressure in the system and the flow control. Multimedia routers in the system communicate with each other using test packets to measure the data flow. EP 1280297 A2 presents a rerouting procedure in an IP network using RTT for measuring communication latency for determining flow quality statistics for real-time transport protocol data. It is not possible for the IP router to reduce the bit rate for a certain flow, only to reroute the flow or drop packets.

It would be desirable if the RBS knew the RTT, because then it could determine if the RTT is too long which can indicate that there is a problem with the transport link. And, if there is a problem with the transport link then this could lead to retransmissions between the RNC and a UE (user equipment such as a mobile handset or terminal). The retransmission of information between the RNC and the UE is not desirable because it reduces the HSDPA throughput. Unfortunately, the traditional RBS does not have the functionality to measure the RTT and as such it can not take corrective action to prevent the problematical retransmissions between the RNC and UE. This shortcoming is addressed by the present invention.

### BRIEF DESCRIPTION OF THE INVENTION

The present invention includes a RBS that measures a RTT which is the time it takes one frame to travel from the RBS to the RNC and then another frame to travel back from the RNC to the RBS. To accomplish this, the RBS would generate an UL control frame and transmit the UL control frame to the RNC. Upon receiving the UL control frame, the RNC would generate a downlink (DL) control frame and transmit the DL control frame to RBS. After receiving the DL control frame, the RBS measures the RTT which is the time it takes the UL control frame to travel from the RBS to the RNC and the DL control frame to travel from the RNC to the RBS. If the measured RTT happens to be greater than a predetermined threshold, then the RBS can address this problem by reducing the bit rate of a certain high-speed (HS) user flow or by reducing the maximum bit rate for all of the HS traffic which is going to be sent by the RNC to the RBS.

### BRIEF DESCRIPTION OF THE DRAWINGS

A more complete understanding of the present invention may be obtained by reference to the following detailed description when taken in conjunction with the accompanying drawings wherein:
FIGURE 1 is a diagram of a third generation cellular network which includes a RBS that can measure a RTT in accordance with the present invention;
FIGURE 2 is a diagram that illustrates how the RBS shown in FIGURE 1 can measure the RTT in accordance with the present invention; and
FIGURES 3A and 3B are diagrams that respectively indicate the preferred structure of an UL RTT control frame and a DL RTT control frame which can be used by the RBS so it can measure the RTT in accordance with the present invention.

### DETAILED DESCRIPTION OF THE DRAWINGS

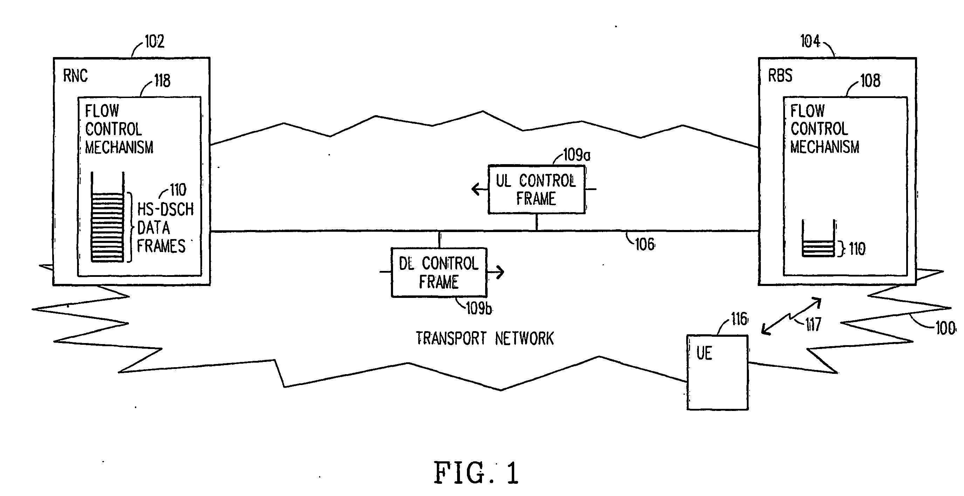

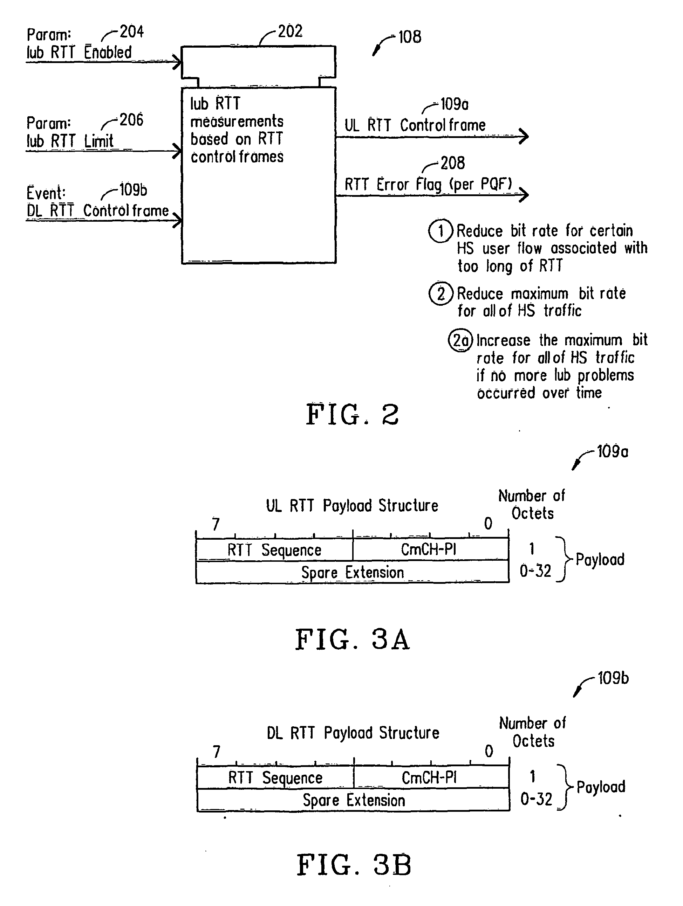

Referring to FIGURE 1, there is shown a block diagram of a third generation cellular network 100 (in particular only a UTRAN 100 (UMTS Terrestrial Radio Access Network 100 is shown) that has a RNC 102 and RBS 104 which are connected to one another via a transport link 106 (Iub 106). The RBS 104 includes a flow control mechanism 108 that can measure the RTT which is the time it takes one frame 109a (e.g., UL RTT control frame 109a) to travel from the RBS 104 to the RNC 102 and then another frame 109b (e.g., DL RTT control frame 109b) to travel back from the RNC 102 to the RBS 104. It is important that the RBS 104 is able to measure the RTT so that the RBS 104 can take corrective action and prevent retransmissions between the RNC 102 and a UE 116 (only one shown). How the RBS 104 can measure the RTT and the possible corrective actions which can be taken if the RTT is too long are described in detail below with respect to FIGURES 2-3.

The RBS 104 by being able to measure the RTT enables the detection of an Iub problem in the area of HSDPA. HSDPA is a wideband radio access network (WRAN) service that utilizes the air-interface 117 in an efficient manner by implementing shorter Transmit Time Intervals (TTIs). In accordance with the HSDPA, the air-interface power that is left between dedicated channel (DCH) users e.g., voice users, and the maximum power from the RBS power amplifier can be used for HSDPA users 116 (HS users 116). For clarity, the DCH users have not been shown. Because, the HS users 116 get a service similar to best effort means that the bit rate an HS user 116 can have over the air interface 117 varies anywhere from a high bit rate (being in the cell with line of sight and with a few DCH users) to a low bit rate (being in a cell without a line of sight and with a lot of DCH users) .

The HSDPA also supports a similar best effort of service for HS users 116 with respect to the transport link 106. Thus, high-speed downlink shared channel (HS-DSCH) data frames 110 which are used by the HS user 116 are not admission controlled like the DCH data frames where each DCH flow has a certain bandwidth with a certain delay over the Iub 106. Instead, HS-DSCH data frames 110 which can belong to one or hundreds of medium access control-d (MAC-d) flows that share the same 'best effort' type of quality of service (QoS) class over the Iub 106. It should be noted that each MAC-d flow has a queue in the RNC 102 and RBS 104. And, each MAC-d flow can compete on ATM adaptation layer 2 (AAL2) Class C path(s) that are carried over unspecified bitrate (UBR+) type of ATM connections, or CBR VC or an IP-based transport network. If the IP-based transport is used, then the present invention is even more advantageous as it is not possible to use a CRC based congestion detection technique.

Because, HS-DSCH data frames 110 use a best effort type of service on the transport link 106 means that the detection of an Iub problem that occurs when the RTT is too long is important so that the Iub problem can be corrected. The Iub problem may be caused if there is too much HS traffic over a scarce Iub 106 which means that HS-DSCH data frames 110 will be dropped or delayed which increases the RTT to a point where an end-user 116 has a poor throughput. This type of Iub problem can be especially problematic to end-users 116 that use Transmission Control Protocol (TCP) for the packet data service because TCP is very sensitive to long RTTs. This Iub problem can also be problematic to end-users that use real-time services like voice over IP or real-time gaming. Another possible problem caused by an increased RTT is the loss of important signaling PDUs which are transmitted using the same best-effort transport network service. And, an extremely high HS-DSCH data frame loss ratio can cause any of these connections to be lost.

To detect this Iub problem, the present invention introduces the use of two RTT control frames referred to herein as the UL RTT control frame 109a and the DL RTT control frame 109b. These two RTT control frames 109a and 109b make it possible for the RBS 104 to measure the RTT which is the time it takes the UL RTT control frame 109a to travel from the RBS 104 to the RNC 102 and the time it takes the DL control frame 109b to travel back from the RNC 102 to the RBS 104. In order to accomplish this, the WCDMA RAN HSDPA hardware and software in the RNC 102 (including a flow control mechanism 118) and RBS 104 needs to be prepared for the introduction and use of the UL RTT control frame 109a and the DL RTT control frame 109b. One way this can be done is described next.

Referring to FIGURE 2, there is a block diagram that is used to help describe how the RBS 104 and in particular the flow control mechanism 108 can measure the RTT using the UL RTT control frame 109a and the DL RTT control frame 109b. As shown, the flow control mechanism 108 (frame handler 202) has three inputs: (1) Iub RTT enabled 204 (per RNC and its RBSs); (2) Iub RTT limit 206 (per RBS); and (3) DL RTT control frame 109b. And, two outputs: (1) RTT error flag 208 (per priority queue flow (PQF) per 100ms); and (2) UL RTT control frame 109a.

In the preferred embodiment, the RBS 104 (flow control mechanism 108) measures the RTT by sending the UL RTT control frame 109a to the RNC 102 using the same transport network channel that is used by user plane HS-DSCH data frames 110. Once, the RNC 102 receives the UL RTT control frame 109a, it then sends the DL RTT control frame 109b to the RBS 104 in the same way it would answer a Capacity Allocation (CA) message by using a new Data Frame (DF) rate. After, the RBS 104 (flow control mechanism 108) receives the DL RTT control frame 109b it can then calculate the RTT by measuring the time it took to receive the DL RTT control frame 109b after it transmitted the UL RTT control frame 109a. Again, the RBS 104 (flow control mechanism 108) by measuring the RTT can then determine if the RTT is too long. And, if the RTT is too long, then the RBS 104 (flow control mechanism 108) can take corrective action to correct the Iub problem and prevent retransmissions between the RNC 102 and the UE 116. How the RBS 104 can correct the Iub problem when there is a RTT that is too long is described next.

If the measured RTT is too long, then the RBS 104 and in particular a frame handler 202 sets and outputs the RTT error flag 208. In response to receiving the RTT error flag 208, the flow control mechanism 108 can temporarily decrease the bit rate (CARate) for the particular priority queue flow (PQF) of HS-DSCH data frames 110 that uses the same channel which was used by the RTT control frames 109a and 109b (see numeral "1" in FIGURE 2). In particular, the RBS 104 can dynamically control the bit rate of a certain flow of HS-DSCH data frames 110 by sending a CA message to the RNC 102. And, if the measured RTTs are too long over a period of time, then the RBS 104 could lower the maximum bit rate (TargetHSRate) for all of the HS traffic sent over the Iub 106 (see numeral "2" in FIGURE 2). Thereafter, if no more Iub problems have occurred over a period of time (10s), then the RBS 104 could increase the maximum bit rate (TargetHSRate) for the HS traffic (see numeral "2a" in FIGURE 2).

Referring to FIGURES 3A and 3B, there are diagrams that respectively indicate the preferred structure of the UL RTT control frame 109a and the DL RTT control frame 109b in accordance with the present invention. To incorporate the RTT control frames 109a and 109b into the 3GPP standard and in particular to 3GPP TS 25.435 (version 5) the following changes could be made to chapters 5 and 6:

### 5.8 General

### 5.8.1 Association between transport bearer and data/control frames

Table 1 shows how the data and control frames are associated to the transport bearers. 'yes' indicates that the control frame is applicable to the transport bearer, 'no' indicates that the control frame is not applicable to the transport bearer.

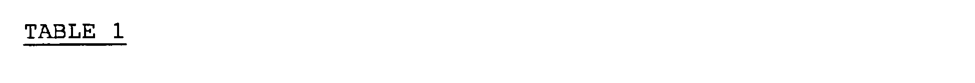

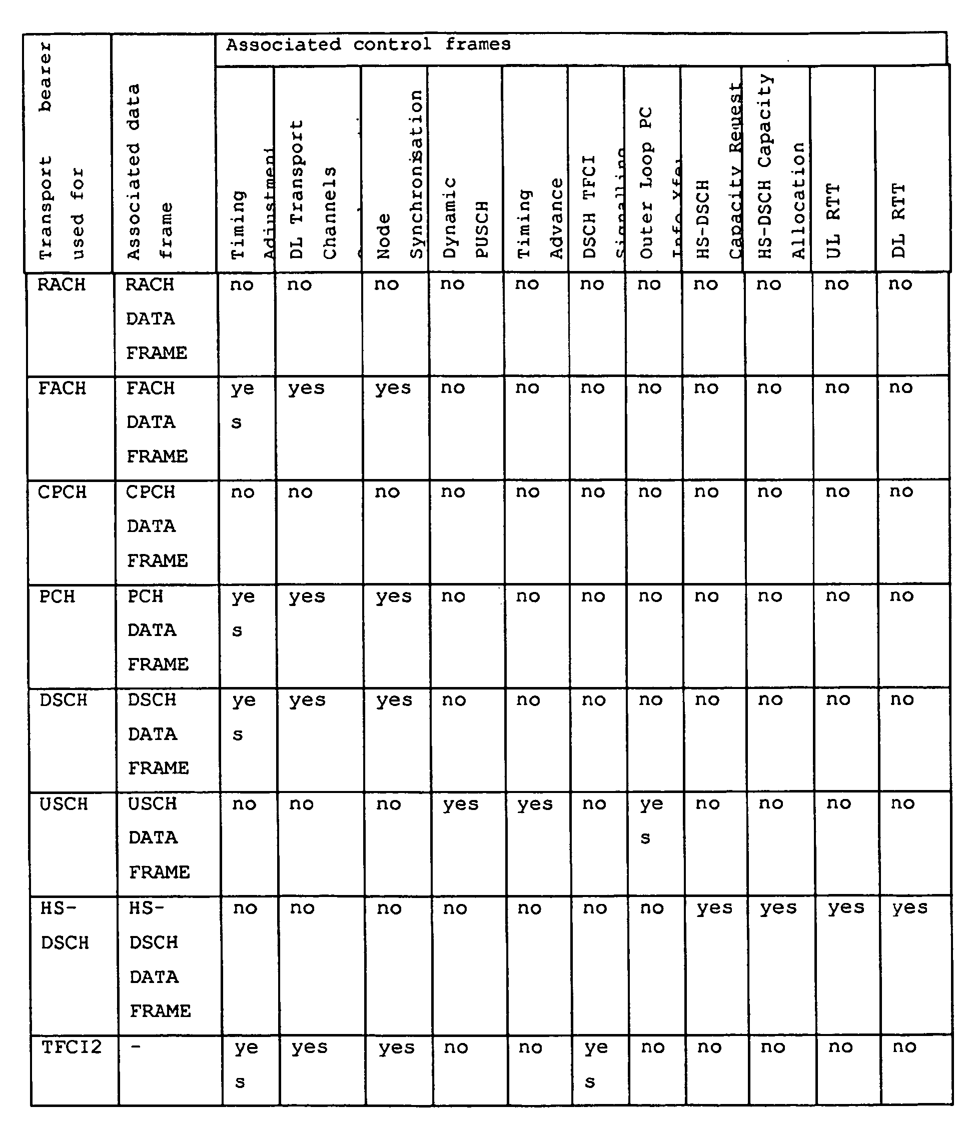

### 5.X Round Trip (RTT)

The Round Trip Time (RTT) measurement procedure provides means for the Node B to initiate an RTT measurement via CRNC and back. The RTT measurement result can be used e.g. for fine-tuning HSDPA timing characteristics.

When CRNC receives an UL RTT control frame, CRNC replies with a DL RTT control frame containing the same RTT Sequence number and CmCH-PI value as received in the UL RTT control frame.

### 6.3.2.3 Control Frame Type

Description: Indicates the type of the control information (information elements and length) contained in the payload.

Value: Values of the Control Frame Type parameter are defined in Table 2.

**Table 2**

| Type of control frame | Value |
|---|---|
| OUTER LOOP POWER CONTROL | 0000 0001 |
| TIMING ADJUSTMENT | 0000 0010 |
| DL SYNCHRONISATION | 0000 0011 |
| UL SYNCHRONISATION | 0000 0100 |
| DSCH TFCI SIGNALLING | 0000 0101 |
| DL NODE SYNCHRONISATION | 0000 0110 |
| UL NODE SYNCHRONISATION | 0000 0111 |
| DYNAMIC PUSCH ASSIGNMENT | 0000 1000 |
| TIMING ADVANCE | 0000 1001 |
| HS-DSCH Capacity Request | 0000 1010 |
| HS-DSCH Capacity Allocation | 0000 1011 |
| UL RTT | 0000 1100 |

### 6.3.3.X UL RTT

### 6.3.3.X.1 Payload Structure

FIGURE 3A (actually FIG. 37 if implemented in the standard) shows the structure of the payload when control frame is used for RTT measurement, UL part.

### 6.3.3.X.2 UL RTT Sequence

Description: The 4-bit RTT Sequence enables use of several outstanding RTT measurements at the same time.
Value range: {0..15}.
Granularity: 1.
Field Length: 4 bits.

### 6.3.3.X.3 Common transport Channel Priority Indicator (CmCH-PI)

Refer to subclause 6.2.7.21.

### 6.3.3.X.4 Spare Extension

Refer to subclause 6.3.3.1.4.

### 6.3.3.Y Payload Structure

FIGURE 3B (actually FIG. 38 if implemented in the standard) shows the structure of the payload when control frame is used for RTT measurement, DL part.

Note: The reason for having two `identical' RTT control frames is for the use of different Spare Extension possibilities.

### 6.3.3.Y.1 DL RTT

### 6.3.3.Y.2 RTT Sequence

Description: The 4-bit RTT Sequence enables use of several outstanding RTT measurements at the same time.
Value range: {0..15}.
Granularity: 1.
Field Length: 4 bits.

### 6.3.3.Y.3 Common transport Channel Priority Indicator (CmCH-PI)

Refer to subclause 6.2.7.21.

### 6.3.3.Y.4 Spare Extension

Refer to subclause 6.3.3.1.4.

For a more detailed discussion about HSDPA and WCDMA reference is made to the following standards:
● 3GPP, TS 25.435, Iub User plane for common channels.
● 3GPP, TS 25.425, Iur User plane for common channels.

Following are some additional features, advantages and uses of the present invention:
● The present invention is related to Patent Application WO2005/104672 entitled "HSDPA Flow Control Data Frame, Frame Number Sequence)". This particular invention detects and corrects an Iub problem that is associated with lost HS-DSCH data frames and can be used in conjunction with the present invention.
● The present invention is related to Patent Application WO2005/107293 entitled "HSDPA Flow Control Data Frame Delay RNC Reference Time" (Attorney Docket No. P19530). This particular invention detects and corrects an Iub problem that is associated with buffer delays and can be used in conjunction with the present invention.
● The present invention makes it possible for the RBS Flow Control Algorithm to detect Iub congestion in a better way and to improve the cell change characteristics.
● Another advantage related to measuring the RTT is that it can be used to help the flow control algorithm fine tune time constants and bit rates. For instance, if the HS user 116 is located in one cell, typically in a first RBS, and is about to be moved to second cell associated with a second RBS. Then the buffer in first RBS needs to be emptied just in time and the data sent to the second RBS just in time. This process can be fine-tuned for better performance if RTT is known.
● It should be noted that certain details associated with the components within the third generation cellular network 100 like the RNC 102 and RBS 104 are well known in the industry. Therefore, for clarity, the description provided above in relation to the RNC 102 and RBS 104 omits those well known details that are not necessary to understand the present invention.

Although one embodiment of the present invention has been illustrated in the accompanying Drawings and described in the foregoing Detailed Description, it should be understood that the invention is not limited to the embodiment disclosed.

## Claims

1. A method for detecting a problem with a transport link (106) between a radio network controller, RNC, (102) and a radio base station, RBS, (104) in a cellular system (100), said method comprising the step of:
Measuring, by the RBS (104), a round-trip-time, RTT, it takes an uplink ,UL, control frame (109a) to travel from the RBS (104) to the RNC, (102) and a downlink, DL, control frame (109b) to travel from the RNC (102) to the RBS (104), wherein said UL control frame and said DL control frame are sent over a common channel which is also used by high speed downlink shared channel, HS-DSCH, data frames (110), and using the measured RTT to control a flow of HS-DSCH data frames (110).

2. The method of Claim 1, further comprising the step of controlling the flow by reducing the bit rate of a certain high-speed, HS, user flow or by reducing the maximum bit rate for all of the HS traffic which is going to be sent by the RNC (102) to the RBS (104).

3. The method of Claim 1, further comprising the step of using the measured RTT to fine tune time constants and bit rates associated with a flow control mechanism (108) in the RBS (104).

4. A cellular system (100), comprising:
a radio network controller, RNC, (102);
a transport link (106); and
a radio base station, RBS, (104), wherein
said RBS (104) generates an uplink, UL, control frame (109a) and transmits said UL control frame (109a) to said RNC (102),
upon receiving said UL control frame (109a), said RNC (102) generates a downlink, DL, control frame (109b) and transmits said DL control frame (109b) to said RBS (104), and
upon receiving said DL control frame (109b), said RBS (104) measures a round-trip-time, RTT, it takes the UL control frame (109a) to travel from the RBS (104) to the RNC (102) and the DL control frame (109b) to travel from the RNC (102) to the RBS (104), and
wherein said UL control frame and said DL control frame are sent over a common channel which is also used by high speed downlink shared channel, HS-DSCH, data frames (110), and
using said measured RTT to control a flow of HS-DSCH data frames (110).

5. The cellular system of Claim 4, wherein:
said UL control frame includes a 4 bit RTT sequence and a common transport channel priority indicator (CmCH-PI); and
said DL control frame includes a 4 bit RTT sequence and a common transport channel priority indicator (CmCH-PI).

6. The cellular system of Claim 4, wherein if said measured RTT is above a predetermined threshold then said RBS sends a message to said RNC instructing said RNC to decrease a bit rate of a priority queue flow associated with a plurality of HS-DSCH data frames (110).

7. The cellular system of Claim 4, wherein if said measured RTT is above a predetermined threshold then said RBS sends a message to said RNC instructing said RNC to decrease a maximum bit rate for all HS traffic which is sent over said transport link to said RBS.

8. The cellular system of Claim 7, wherein said RBS increases the maximum bit rate for the HS traffic after a predetermined period of time during which subsequently measured RTTs have not exceeded a predetermined threshold.

9. A radio base station, RBS, (104), comprising:
a flow control mechanism (108) that measures a round-trip-time, RTT, it takes an uplink, UL, control frame (109a) to travel to a radio network controller, RNC, (102) and a downlink, DL, control frame (109b) to travel back from the RNC (102), wherein said UL control frame and said DL control frame are sent over a common channel which is also used by high speed downlink shared channel, HS-DSCH, data frames (110), and wherein said flow control mechanism uses the measured RTT to control a flow of HS-DSCH data frames (110).

10. The radio base station of Claim 9, wherein:
said UL control frame includes a 4 bit RTT sequence and a common transport channel priority indicator (CmCH-PI); and
said DL control frame includes a 4 bit RTT sequence and a common transport channel priority indicator (CmCH-PI).

## Patentansprüche

1. Verfahren zum Erkennen eines Problems bei einem Transportlink (106) zwischen einer Funknetzsteuerung, RNC, (102) und einer Funkbasisstation, RBS, (104) in einem Zellularsystem (100), wobei das Verfahren folgenden Schritt umfasst:
durch die RBS (104) Messen der Umlaufzeit, RTT, die ein Uplink, UL, - Steuerrahmen (109a) benötigt, um von der RBS (104) zur RNC (102) zu gelangen, und die ein Downlink, DL, -Steuerrahmen (109b) benötigt, um von der RNC (102) zur RBS (104) zu gelangen, worin der UL-Steuerrahmen und der DL-Steuerrahmen über einen gemeinsam genutzten Kanal gesendet werden, der auch durch gemeinsam genutzte Hochgeschwindigkeits-Downlinkkanal, HS-DSCH, -Datenrahmen (110) verwendet wird, und Verwenden der gemessenen RTT, um einen Fluss von HS-DSCH-Datenrahmen (110) zu steuern.

2. Verfahren nach Anspruch 1, außerdem den Schritt umfassend, den Fluss durch Reduzieren der Bitrate eines bestimmten Hochgeschwindigkeits, HS, -Teilnehmerflusses oder durch Reduzieren der maximalen Bitrate für jeden Teil des HS-Verkehrs, der von der RNC (102) an die RBS (104) gesendet werden soll zu steuern.

3. Verfahren nach Anspruch 1, außerdem den Schritt umfassend, die gemessene RTT zu verwenden, um Zeitkonstanten und Bitraten fein abzustimmen, die mit einem Flusssteuermechanismus (108) in der RBS (104) assozüert sind.

4. Zellularsystem (100), folgendes umfassend:
eine RNC (102);
einen Transportlink (106); und
eine RBS (104), worin
die RBS (104) einen UL-Steuerrahmen (109a) erzeugt und den UL-Steuerrahmen (109a) an die RNC (102) überträgt,
die RNC (102) nach Empfang des UL-Steuerrahmens (109a) einen DL-Steuerrahmen (109b) erzeugt und den DL-Steuerrahmen (109b) an die RBS (104) überträgt, und
die RBS (104) nach Empfang des DL-Steuerrahmens (109b) eine RTT misst, die der UL-Steuerrahmen (109a) benötigt, um von der RBS (104) zur RNC (102) zu gelangen, und der DL-Steuerrahmen (109b) benötigt, um von der RNC (102) zur RBS (104) zu gelangen, und
worin der UL-Steuerrahmen und der DL-Steuerrahmen über einen gemeinsam genutzten Kanal gesendet werden, der auch von HS-DSCH-Datenrahmen (110) verwendet wird, und
wobei die gemessene RTT verwendet wird, um einen Fluss von HS-DSCH-Datenrahmen (110) zu steuern.

5. Zellularsystem nach Anspruch 4, worin:
der UL-Steuerrahmen eine 4-Bit-RTT-Sequenz und einen Prioritätsanzeiger des gemeinsam genutzten Transportkanals enthält; und
der DL-Steuerrahmen eine 4-Bit-RTT-Sequenz und einen Prioritätsanzeiger des gemeinsam genutzten Transportkanals enthält.

6. Zellularsystem nach Anspruch 4, worin, falls die gemessene RTT über einer vorbestimmten Schwelle liegt, die RBS dann eine Nachricht an die RNC sendet, die die RNC anweist, eine Bitrate eines mit einer Vielzahl von HS-DSCH-Datenrahmen (110) assoziierten Prioritätswarteschlangenflusses zu reduzieren.

7. Zellularsystem nach Anspruch 4, worin, falls die gemessene RTT über einer vorbestimmten Schwelle liegt, die RBS dann eine Nachricht an die RNC sendet, die die RNC anweist, eine maximale Bitrate für jeden HS-Verkehr zu reduzieren, der über den Transportlink an die RBS gesendet wird.

8. Zellularsystem nach Anspruch 7, worin die RBS die maximale Bitrate für den HS-Verkehr nach einer vorbestimmten Zeitperiode erhöht, während der nachfolgend gemessene RTTs eine vorbestimmte Schwelle nicht überschritten haben.

9. Funkbasisstation, RBS, (104), Folgendes umfassend:
einen Flusssteuermechanismus (108), der eine RTT misst, die ein Uplink, UL, - Steuerrahmen (109a) benötigt, um zu einer RNC (102) zu gelangen, und die ein DL-Steuerrahmen (109b) benötigt, um von der RNC (102) zurückzugelangen, worin der UL-Steuerrahmen und der DL-Steuerrahmen über einen gemeinsam genutzten Kanal gesendet werden, der auch von HS-DSCH-Datenrahmen (110) verwendet wird, und worin der Flusssteuermechanismus die gemessene RTT verwendet, um einen Fluss von HS-DSCH-Datenrahmen (110) zu steuern.

10. Funkbasisstation nach Anspruch 9, worin:
der UL-Steuerrahmen eine 4-Bit-RTT-Sequenz und einen Prioritätsanzeiger des gemeinsam genutzten Transportkanals enthält; und
der DL-Steuerrahmen eine 4-Bit-RTT-Sequenz und einen Prioritätsanzeiger des gemeinsam genutzten Transportkanals enthält.

## Revendications

1. Procédé destiné à détecter un problème sur une liaison de transport (106) entre un contrôleur de réseau radio (102) et une station de base radio (104) dans un système cellulaire (100), le procédé comportant l'étape ci-dessous consistant à :
mesurer, par le biais de la station de base radio (104), le temps de trajet aller-retour (RTT) nécessaire à une trame de commande en liaison montante (UL) (109a) pour transiter de la station de base radio (104) au contrôleur de réseau radio (102) et à une trame de commande en liaison descendante (DL) (109b) pour transiter du contrôleur de réseau radio (102) à la station de base radio (104), dans lequel ladite trame de commande en liaison montante UL et ladite trame de commande en liaison descendante DL sont envoyées sur un canal commun lequel est également utilisé par des trames de données de canal partagé en liaison descendante haute vitesse (HS-DSCH) (110), et utiliser le temps de trajet RTT mesuré pour commander un flux de trames de données de canal partagé en liaison descendante haute vitesse (HS-DSCH) (110).

2. Procédé selon la revendication 1, comprenant en outre l'étape consistant à commander le flux en réduisant le débit binaire d'un certain flux utilisateur haute vitesse (HS) ou en réduisant le débit binaire maximum de l'ensemble du trafic HS destiné à être envoyé par le contrôleur RNC (102) à la station RBS (104).

3. Procédé selon la revendication 1, comprenant en outre l'étape consistant à utiliser le temps de trajet RTT mesuré pour syntoniser avec précision les constantes de temps et débits binaires associés à un mécanisme de commande de flux (108) dans la station de base radio (104).

4. Système cellulaire (100) comportant :
un contrôleur de réseau radio (102) ;
une liaison de transport (106) ; et
une station de base radio (104), dans laquelle
ladite station de base radio (104) génère une trame de commande en liaison montante (UL) (1 09a) et transmet ladite trame de commande en liaison montante UL (109a) audit contrôleur de réseau radio (102) ;
suite à la réception de ladite trame de commande en liaison montante UL (109a), ledit contrôleur de réseau radio (102) génère une trame de commande en liaison descendante (DL) (109b) et transmet ladite trame de commande en liaison descendante DL (109b) à ladite station de base radio (104) ; et
suite à la réception de ladite trame de commande en liaison descendante DL (109b), ladite station de base radio (104) mesure un temps de trajet aller-retour (RTT) nécessaire à la trame de commande en liaison montante UL (109a) pour transiter de la station de base radio (104) au contrôleur de réseau radio (102) et à la trame de commande en liaison descendante DL (109b) pour transiter du contrôleur de réseau radio (102) à la station de base radio (104) ; et
dans lequel ladite trame de commande en liaison montante UL et ladite trame de commande en liaison descendante DL sont envoyées sur un canal commun lequel est également utilisé par des trames de données de canal partagé en liaison descendante haute vitesse (HS-DSCH) (110) ; et comportant l'étape consistant à
utiliser ledit temps de trajet RTT mesuré pour commander un flux de trames de données de canal partagé en liaison descendante haute vitesse (HS-DSCH) (110).

5. Système cellulaire selon la revendication 4, dans lequel :
ladite trame de commande en liaison montante UL comporte une séquence RTT de 4 bits et un indicateur de priorité de canal de transport commun (CmCH-PI) ; et
ladite trame de commande en liaison descendante DL comporte une séquence RTT de 4 bits et un indicateur de priorité de canal de transport commun (CmCH-PI).

6. Système cellulaire selon la revendication 4, dans lequel, si ledit temps de trajet RTT mesuré est supérieur à un seuil prédéterminé alors ladite station de base radio envoie un message audit contrôleur de réseau radio indiquant audit contrôleur de réseau radio de diminuer un débit binaire d'un flux de file d'attente de priorité (PQF) associé à une pluralité de trames de données HS-DSCH (110).

7. Système cellulaire selon la revendication 4, dans lequel, si ledit temps de trajet RTT mesuré est supérieur à un seuil prédéterminé, alors ladite station de base radio envoie un message audit contrôleur de réseau radio indiquant audit contrôleur de réseau radio de diminuer un débit binaire maximal de l'ensemble du trafic HS qui est envoyé sur ladite liaison de transport à ladite station de base radio.

8. Système cellulaire selon la revendication 1, dans lequel ladite station de base radio augmente le débit binaire maximum du trafic HS suite à une période de temps prédéterminée au cours de laquelle des temps de trajet RTT mesurés subséquemment n'ont pas dépassé un seuil prédéterminé.

9. Station de base radio (104) comportant :
un mécanisme de commande de flux (108) lequel mesure un temps de trajet aller-retour (RTT) nécessaire à une trame de commande en liaison montante (UL) (109a) pour transiter vers un contrôleur de réseau radio (102) et à une trame de commande en liaison descendante (DL) (109b) pour transiter sur le chemin inverse en partant du contrôleur de réseau radio (102), dans lequel ladite trame de commande en liaison montante UL et ladite trame de commande en liaison descendante DL sont envoyées sur un canal commun lequel est également utilisé par des trames de données de canal partagé en liaison descendante haute vitesse (HS-DSCH) (110), et dans lequel ledit mécanisme de commande de flux utilise le temps de trajet RTT mesuré pour commander un flux de trames de données de canal partagé en liaison descendante haute vitesse (HS-DSCH) (110).

10. Station de base radio selon la revendication 9, dans laquelle :
ladite trame de commande en liaison montante UL comporte une séquence RTT de 4 bits et un indicateur de priorité de canal de transport commun (CmCH-PI) ; et
ladite trame de commande en liaison descendante DL comporte une séquence RTT de 4 bits et un indicateur de priorité de canal de transport commun (CmCH-PI).
